# EUROPEAN PATENT SPECIFICATION

(11) **EP 1 189 050 B1**
(45) Date of publication and mention of the grant of the patent: **27.05.2009**
(21) Application number: 01122305.4
(22) Date of filing: 18.09.2001
(51) Int. Cl.: G01L 23/24, F02F 1/42

(54) **Pressure detector for the cylinder head of an internal-combustion engine, and a cylinder head of an internal-combustion engine provided with such a pressure detector**
Druckdetektor für den Zylinderkopf eines internen Verbrennungsmotors und Zylinderkopf mit einem solchen Druckdetektor
Détecteur de pression pour culasse de moteur à combustion interne et culasse munie d'un tel détecteur de pression

(30) Priority: 19.09.2000 IT TO000874
(43) Date of publication of application: 20.03.2002
(73) Proprietor: IVECO S.p.A., 10156 Torino (IT); Iveco Motorenforschung AG, CH-9320 Arbon (CH)
(72) Inventor: Dellora, Giancarlo, 10036 Settimo Torinese (IT); Spuler Jürg, 9315 Neukirch (CH)
(74) Representative: Gervasi, Gemma

(56) References cited:
- GB-A- 882 605
- US-A- 3 924 457
- PATENT ABSTRACTS OF JAPAN vol. 018, no. 123 (M-1568), 28 February 1994 (1994-02-28) & JP 05 312096 A (MITSUBISHI MOTORS CORP), 22 November 1993 (1993-11-22)

## Description

The present invention relates to a pressure detector for the cylinder head of an internal-combustion engine, in particular an internal-combustion engine of a vehicle.

In the internal-combustion engines of vehicles there is a requirement to detect the pressure of the gases flowing out of the cylinders towards the exhaust manifold so as to verify correct operation and/or to carry out closed-loop control of the various devices of the vehicle, for example including the variable geometry turbosupercharger, the system for recirculating the exhaust gas to the intake (EGR) and the catalytic converter. Such an exhaust-gas pressure detector is disclosed in US-A-3 924 457.

It is very difficult to detect the exhaust gas pressure using pressure transducers of conventional type in the exhaust ducts of the engine cylinder head, insofar as the ambient measuring conditions are extremely severe owing to the high temperatures of the exhaust gases and because of the presence, in said gases, of combustion residues which tend to form carbon deposits.

The object of the present invention is to devise a pressure detector for the cylinder head of an internal-combustion engine, which makes it possible to solve the above-mentioned problems in a simple and economical manner.

According to the present invention there is provided a pressure detector for the cylinder head of an internal-combustion engine, comprising at least one exhaust-gas outlet duct and a plurality of cooling chambers forming part of a cooling circuit of said engine; the detector comprising a pressure sensor and being characterised by further comprising a probe extended along an axis, and comprising a first end portion adapted to communicate with said outlet duct, and an opposite second end portion defining a measuring chamber accommodating said pressure sensor and adapted to extend into a zone of said cylinder head cooled by said cooling chambers; said probe delimiting a passage adapted to extend between said outlet duct and said measuring chamber.

The present invention further relates to a cylinder head of an internal-combustion engine.

According to the present invention there is provided a cylinder head of an internal-combustion engine, comprising at least one exhaust-gas outlet duct and a plurality of cooling chambers forming part of a cooling circuit of said engine; characterised by further comprising an monitoring hole extending between said outlet duct and the exterior, and a pressure detector engaged in said monitoring hole and comprising a pressure sensor and a probe extended along an axis, comprising a first end portion communicating with said outlet duct, and an opposite second end portion defining a measuring chamber accommodating said pressure sensor and extending into a zone of said cylinder head surrounded by said cooling chambers; said probe delimiting a passage extending between said outlet duct and said measuring chamber.

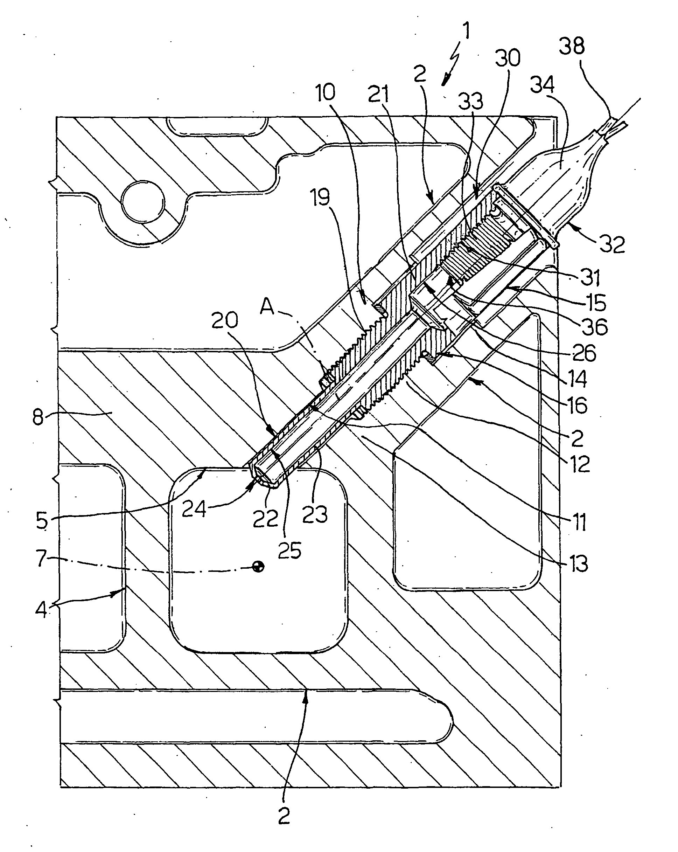

The invention will now be described with reference to the accompanying drawing which illustrates, in section, a preferred non-restrictive embodiment of the pressure detector provided in accordance with the present invention and connected with a cylinder head of an internal-combustion engine.

In the accompanying drawing the reference numeral 1 generally denotes a cylinder head of an internal-combustion engine, in particular a diesel engine for a commercial vehicle. The engine comprises a crankcase (not shown) defining a plurality of cylinders, whereas the cylinder head 1 delimits a plurality of channels or chambers 2 which form part of a cooling circuit of the engine, through which a coolant flows. The cylinder head 1 further comprises, for each cylinder, two inlet ducts (not shown) for the intake of combustion air, and two exhaust ducts for the outlet of the exhaust gases.

Only one pair of exhaust ducts, designated 4 and 5, are illustrated in the accompanying drawing, which ducts have respective axes 7 substantially orthogonal to the plane of the drawing and which are delimited by a portion 8 of the cylinder head 1 partially surrounded by the chamber 2 so as to be cooled by the coolant. An exhaust manifold (not shown) is adapted to be connected, in known manner, to the portion 8 and to convey the exhaust gases from all the exhaust ducts associated with the cylinders.

The cylinder head 1 further comprises a portion 10 which extends between the portion 8 towards the outside of the cylinder head 1 itself and has a through-hole 11 which communicates the duct 5 with the exterior along a rectilinear axis A substantially orthogonal to the axis 7.

The portion 10 comprises an internally threaded intermediate section 12 and two opposite cylindrical end sections 13 and 14 which are of internal diameter increasing from the section 13 towards the section 14, and of which the section 13 is turned towards the duct 5 and the section 14 is turned towards the exterior, whereas the sections 12 and 14 are surrounded and cooled by the chambers 2.

Still referring to the accompanying drawing, the hole 11 is engaged, in a fluidtight manner, by a pressure detector 15 comprising a probe 16 which extends along the axis A and which is defined by an axially elongated cylindrical tubular body.

The probe 16 comprises an externally threaded intermediate axial portion 19 connected with the section 12, and two opposed axial end portions 20 and 21, of which the portion 20 engages the section 13, whereas the portion 21 engages the section 14.

The portion 20 comprises a frustoconical end 22 defining an axial orifice 24 and a cylindrical section 23 which has a radial thickness less than 1/6 of its own outer diameter and an axial length at least three times the outer diameter itself. For example, the section 23 has an outer diameter equal to about 9 mm, an inner diameter equal to about 7 mm and a length equal to about 38 mm, whereas the orifice 24 has a diameter of about 1.2 mm.

The section 23 delimits an axial channel 25 which also extends into the portion 19 and communicates, together with the orifice 24, the duct 5 with a measuring chamber 26 delimited by the portion 21 and of larger diameter than the channel 25.

Still referring to the accompanying drawing, the portion 21 has a hexagonal prismatic outer surface 30 spaced apart from the section 14 and adapted to be handled for the connection of the probe 16 to the portion 10, and a threaded inner cylindrical surface 31 with which a pressure transducer 32 of known type is connected fluidtightly.

The transducer 32 comprises two opposed end portions 33 and 34, of which the portion 33 is threaded and screwed to the surface 31, and has a flat surface 36 delimiting the chamber 26, whereas the portion 34 extends outside the probe 16 and partially outside the cylinder head 1, and it is connected to a control processor (not shown) by wires 38 (partly shown).

In operation, the transducer 32 is adapted to detect the pressure acting on the surface 36 in the chamber 26 and to transmit to the processor an electrical signal correlated to the pressure detected, in particular a voltage signal.

From the moment when the duct 5 is in communication with all the exhaust ducts of the cylinder head 1 through the manifold (not shown), the transducer 32 is able to sense the pressure pulses generated by the other cylinders.

The thin-walled elongate portion 20 brings about reduced heat transmission by conduction from the duct 5 towards the chamber 26, whereas the portion 21 and the portion 19 are disposed in zones cooled by the channels 2 and therefore are at a considerably lower temperature than that present in the duct 5.

Because of the reduced section of the orifice 24, any combustion residues present in the exhaust gases tend to be deposited thereon, rather than on the transducer 32, but they are completed burnt off when the end 22 of the portion 20 is exposed to bursts of flame at very high temperature, which occur in the exhaust ducts 4,5.

Finally, it is evident that the detector 15 can be subject to modifications and variations which do not go beyond the scope of protection of the present invention.

In particular, the dimensions of the probe 16 could be different from those illustrated.

## Claims

1. A pressure detector (15) for the cylinder head (1) of an internal-combustion engine, comprising at least one exhaust-gas outlet duct (4,5) and a plurality of cooling chambers (2) forming part of a cooling circuit of said engine; the detector (15) comprising a pressure sensor (32) and being **characterised by** further comprising a probe (16) extended along an axis (A), and comprising a first end portion (20) adapted to communicate with said outlet duct (5), and an opposite second end portion (21) defining a measuring chamber (26) accommodating said pressure sensor (32) and adapted to extend into a zone (12,14) of said cylinder head (1) cooled by said cooling chambers (2); said probe (16) delimiting a passage (24,25) adapted to extend between said outlet duct (5) and said measuring chamber (26).

2. A detector according to claim 1, **characterised in that** said passage (24,25) comprises an elongate axial channel (25) and an orifice (24) provided in said first end portion (20) and of smaller dimensions than said axial channel (25).

3. A detector according to claim 2, **characterised in that** said orifice (24) is provided along said axis (A).

4. A detector according to claim 2 or 3, **characterised in that** said first portion (16) comprises a tubular portion (23) delimiting at least partly said axial channel (25) and of a radial thickness less than 1/6 of the outer diameter thereof.

5. A detector according to claim 4, **characterised in that** said tubular section (23) has an axial length at least three times the outer diameter thereof.

6. A detector according to any one of the preceding claims, **characterised in that** said probe (16) comprises an externally threaded intermediate portion (19) for connection to said cylinder head (1) and adapted to extend into said zone (12,14) cooled by said cooling chambers (2).

7. A detector according to any one of the preceding claims, **characterised in that** said probe (16) comprises a handling surface (30) for connection to said cylinder head (1).

8. A cylinder head (1) of an internal-combustion engine comprising at least one exhaust-gas outlet duct (4,5) and a plurality of cooling chambers (2) forming part of a cooling circuit (3) of said engine; **characterised by** further comprising an monitoring hole (11) extending between said outlet duct (5) and the exterior, and a pressure detector (15) engaged in said monitoring hole (11) and comprising a pressure sensor (32) and a probe (16) extended along an axis (A), comprising a first end portion (20) communicating with said outlet duct (5), and an opposite second end portion (21) defining a measuring chamber (26) accommodating said pressure sensor (32) and extending into a zone (12,14) of said cylinder head (1) surrounded by said cooling chambers (2); said probe (16) delimiting a passage (24,25) extending between said outlet duct (5) and said measuring chamber (26).

9. A cylinder head according to claim 8, **characterised in that** said passage (24,25) comprises an elongate axial channel (25) and an orifice (24) provided in said first end portion (20) and of smaller dimensions than said axial channel (25).

10. A cylinder head according to claim 9, **characterised in that** said first end portion (20) comprises a tubular portion (23) delimiting at least partly said axial channel (25) and of a radial thickness less than 1/6 of the outer diameter thereof.

11. A cylinder head according to any one of claims 8 to 10, **characterised in that** said probe (16) comprises an externally threaded intermediate portion (19) which is connected to said cylinder head (1) in said zone (12,14) cooled by said cooling chambers (2).

12. A cylinder head according to any one of claims 8 to 11, **characterised in that** said detector (15) comprises an external thread and an internal thread (31,33) interposed between said pressure sensor (32) and said probe (16).

13. A cylinder head according to any one of claims 8 to 12, **characterised in that** said monitoring hole (11) is provided in a direction substantially orthogonal to said duct (5).

## Patentansprüche

1. Druckdetektor (15) für den Zylinderkopf (1) eines Verbrennungsmotors, umfassend zumindest einen Abgasauslasskanal (4, 5) und eine Mehrzahl von Kühlkammern (2), die einen Teil eines Kühlkreislaufs des Motors bilden; wobei der Detektor (15) einen Drucksensor (32) aufweist und **dadurch gekennzeichnet ist, dass** er ferner einen Fühler (16) aufweist, der entlang einer Achse (A) erstreckt ist und einen ersten Endabschnitt (20), der eingerichtet ist, um mit dem Auslasskanal (5) verbunden zu sein, und einen gegenüberliegenden zweiten Endabschnitt (21) umfasst, der eine Messkammer (26) definiert, die den Drucksensor (32) aufnimmt und angepasst ist, sich in eine Zone (12, 14) des Zylinderkopfs (1) zu erstrecken, die durch die Kühlkammern (2) gekühlt wird; wobei der Fühler (16) einen Durchgang (24, 25) abgrenzt, der angepasst ist, sich zwischen dem Auslasskanal (5) und der Messkammer (26) zu erstrecken.

2. Detektor nach Anspruch 1, **dadurch gekennzeichnet, dass** der Durchgang (24, 25) einen länglichen axialen Kanal (25) und eine Mündung (24) aufweist, die in dem ersten Endabschnitt (20) vorhanden ist und von kleinerer Größe ist als der axiale Kanal (25).

3. Detektor nach Anspruch 2, **dadurch gekennzeichnet, dass** die Mündung (24) entlang der Achse (A) vorgesehen ist.

4. Detektor nach Anspruch 2 oder 3, **dadurch gekennzeichnet, dass** der erste Abschnitt (16) einen röhrenförmigen Abschnitt (23) aufweist, der zumindest teilweise den axialen Kanal (25) abgrenzt und von einer radialen Dicke von weniger als 1/6 des äußeren Durchmessers davon ist.

5. Detektor nach Anspruch 4, **dadurch gekennzeichnet, dass** der röhrenförmige Abschnitt (23) eine axiale Länge von mindestens dem 3-Fachen des äußeren Durchmessers davon aufweist.

6. Detektor nach einem der vorstehenden Ansprüche, **dadurch gekennzeichnet, dass** der Fühler (16) einen mit einem Außengewinde versehenen Zwischenabschnitt (19) zum Verbinden mit dem Zylinderkopf (1) aufweist und angepasst ist, sich in die Zone (12, 14) zu erstrecken, die durch die Kühlkammern (2) gekühlt wird.

7. Detektor nach einem der vorstehenden Ansprüche, **dadurch gekennzeichnet, dass** der Fühler (16) eine Betriebsoberfläche (30) zum Verbinden mit dem Zylinderkopf (1) aufweist.

8. Zylinderkopf (1) eines Verbrennungsmotors, umfassend zumindest einen Abgasauslasskanal (4, 5) und eine Mehrzahl von Kühlkammern (2), die einen Teil eines Kühlkreislaufs (3) des Motors bilden; **dadurch gekennzeichnet, dass** er ferner eine Kontrollöffnung (11), die sich zwischen dem Auslasskanal (5) und dem Äußeren erstreckt, und einen Druckdetektor (15) aufweist, der in der Kontrollöffnung (11) in Eingriff steht und einen Drucksensor (32) und einen Fühler (16) umfasst, die entlang einer Achse (A) erstreckt sind, umfassend einen ersten Endabschnitt (20), der mit dem Auslasskanal (5) in Verbindung steht, und einen gegenüberliegenden zweiten Endabschnitt (21), der eine Messkammer (26) definiert, die den Drucksensor (32) aufnimmt und sich in eine Zone (12, 14) des Zylinderkopfs (1) erstreckt, die durch die Kühlkammern (2) umgeben ist; wobei der Fühler (16) einen Durchgang (24, 25), der sich zwischen dem Auslasskanal (5) und der Messkammer (26) erstreckt, abgrenzt.

9. Zylinderkopf nach Anspruch 8, **dadurch gekennzeichnet, dass** der Durchgang (24, 25) einen länglichen axialen Kanal (25) und eine Mündung (24) aufweist, die in dem ersten Endabschnitt (20) vorhanden ist und von kleinerer Größe als der axiale Kanal (25) ist.

10. Zylinderkopf nach Anspruch 9, **dadurch gekennzeichnet, dass** der erste Endabschnitt (20) einen röhrenförmigen Abschnitt (23) aufweist, der zumindest teilweise den axialen Kanal (25) abgrenzt und von einer radialen Dicke ist, die kleiner als 1/6 des äußeren Durchmessers davon ist.

11. Zylinderkopf nach einem der Ansprüche 8 bis 10, **dadurch gekennzeichnet, dass** der Fühler (16) einen mit einem Außengewinde versehenen Zwischenabschnitt (19) aufweist, der mit dem Zylinderkopf (1) in der Zone (12, 14), die durch die Kühlkammern (2) gekühlt wird, verbunden ist.

12. Zylinderkopf nach einem der Ansprüche 8 bis 11, **dadurch gekennzeichnet, dass** der Detektor (15) ein Außengewinde und ein Innengewinde (31, 33) aufweist, die zwischen dem Drucksensor (32) und dem Fühler (16) eingefügt sind.

13. Zylinderkopf nach einem der Ansprüche 8 bis 12, **dadurch gekennzeichnet, dass** die Kontrollöffnung (11) in einer Richtung vorgesehen ist, die im Wesentlichen senkrecht zu der Führung (5) ist.

## Revendications

1. Détecteur de pression (15) pour la culasse (1) d'un moteur à combustion interne, comprenant au moins un conduit de sortie de gaz d'échappement (4, 5) et une pluralité de chambres de refroidissement (2) formant une partie d'un circuit de refroidissement dudit moteur, le détecteur (15) comprenant un capteur de pression (32), et étant **caractérisé en ce qu'**il comprend en outre une sonde (16) étendue le long d'un axe (A), et comprenant une première partie d'extrémité (20) adaptée pour communiquer avec ledit conduit de sortie (5), et une seconde partie d'extrémité opposée (21) définissant une chambre de mesure (26) recevant ledit capteur de pression (32) et adaptée pour s'étendre dans une zone (12, 14) de ladite culasse (1) refroidie par lesdites chambres de refroidissement (2), ladite sonde (16) délimitant un passage (24, 25) adapté pour s'étendre entre ledit conduit de sortie (5) et ladite chambre de mesure (26).

2. Détecteur selon la revendication 1, **caractérisé en ce que** ledit passage (24, 25) comprend un canal axial allongé (25) et un orifice (24) agencé dans ladite première partie d'extrémité (20), et ayant des dimensions inférieures audit canal axial (25).

3. Détecteur selon la revendication 2, **caractérisé en ce que** ledit orifice (24) est agencé le long dudit axe (A).

4. Détecteur selon la revendication 2 ou 3, **caractérisé en ce que** ladite première partie (16) comprend une partie tubulaire (23) délimitant au moins partiellement ledit canal axial (25), et d'une épaisseur radiale inférieure à 1/6ème de son diamètre extérieur.

5. Détecteur selon la revendication 4, **caractérisé en ce que** ledit tronçon tubulaire (23) a une longueur axiale représentant au moins trois fois son diamètre extérieur.

6. Détecteur selon l'une quelconque des revendications précédentes, **caractérisé en ce que** ladite sonde (16) comprend une partie intermédiaire filetée extérieurement (19) pour une connexion avec ladite culasse (1), et adaptée pour s'étendre dans ladite zone (12, 14) refroidie par lesdites chambres de refroidissement (2).

7. Détecteur selon l'une quelconque des revendications précédentes, **caractérisé en ce que** ladite sonde (16) comprend une surface de manipulation (30) pour une connexion avec ladite culasse (1).

8. Culasse (1) d'un moteur à combustion interne, comprenant au moins un conduit de sortie de gaz d'échappement (4, 5) et une pluralité de chambres de refroidissement (2) formant une partie d'un circuit de refroidissement (3) dudit moteur, **caractérisée en ce qu'**elle comprend en outre un trou du surveillance (11) s'étendant entre ledit conduit de sortie (5) et l'extérieur, et un détecteur de pression (15) mis en prise dans ledit trou de surveillance (11), et comprenant un capteur de pression (32) et une sonde (16) étendue le long d'un axe (A), comprenant une première partie d'extrémité (20) communiquant avec ledit conduit de sortie (5), et une seconde partie d'extrémité opposée (21) définissant une chambre de mesure (26) recevant ledit capteur de pression (32), et s'étendant dans une zone (12, 14) de ladite culasse (1) entourée desdites chambres de refroidissement (2), ladite sonde (16) délimitant un passage (24, 25) s'étendant entre ledit conduit de sortie (5) et ladite chambre de mesure (26).

9. Culasse selon la revendication 8, **caractérisée en ce que** ledit passage (24, 25) comprend un canal axial allongé (25) et un orifice (24) agencé dans ladite première partie d'extrémité (20), et ayant des dimensions inférieures audit canal axial (25).

10. Culasse selon la revendication 9, **caractérisée en ce que** ladite première partie d'extrémité (20) comprend une partie tubulaire (23) délimitant au moins partiellement ledit canal axial (25), et d'une épaisseur radiale inférieure à 1/6ème de son diamètre extérieur.

11. Culasse selon l'une quelconque des revendications 8 à 10, **caractérisée en ce que** ladite sonde (16) comprend une partie intermédiaire filetée extérieurement (19) qui est reliée à ladite culasse (1) dans ladite zone (12, 14) refroidie par lesdites chambres de refroidissement (2).

12. Culasse selon l'une quelconque des revendications 8 à 11, **caractérisée en ce que** ledit détecteur (15) comprend un filet externe et un filet interne (31, 33) interposés entre ledit capteur de pression (32) et ladite sonde (16).

13. Culasse selon l'une quelconque des revendications 8 à 12, **caractérisée en ce que** ledit trou de surveillance (11) est agencé dans une direction sensiblement orthogonale par rapport audit conduit (5).
